# EUROPÄISCHE PATENTSCHRIFT

(11) **EP 2 235 097 B1**
(45) Veröffentlichungstag und Bekanntmachung des Hinweises auf die Patenterteilung: **30.11.2011**
(21) Anmeldenummer: 08863817.6
(22) Anmeldetag: 19.12.2008
(51) Int. Cl.: C08J 9/224, C08J 9/232, A01N 25/10, A01N 25/16, A01M 1/24

(54) **INSEKTIZID AUSGERÜSTETE PARTIKEL AUS EXPANDIERBAREM POLYSTYROL UND DARAUS ERHÄLTLICHE INSEKTIZID AUSGERÜSTETE FORMTEILE**
INSECTICIDE-EQUIPPED PARTICLES MADE OF EXPANDABLE POLYSTYRENE AND INSECTICIDE-EQUIPPED MOLDED PARTS WHICH CAN BE OBTAINED THEREFROM
PARTICULES MUNIES D'INSECTICIDE À BASE DE POLYSTYRÈNE EXPANSIBLE ET ARTICLES MOULÉS MUNIS D'INSECTICIDE POUVANT ÊTRE OBTENUS À PARTIR DE CES PARTICULES

(30) Priorität: 21.12.2007 US 16005
(43) Veröffentlichungstag der Anmeldung: 06.10.2010
(73) Patentinhaber: BASF SE, 67056 Ludwigshafen (DE)
(72) Erfinder: ISHAQUE, Michael, 68165 Mannheim (DE); KRIHA,Olaf, 67063 Ludwigshafen (DE); SCHIPS, Carsten, 67342 Speyer (DE); GUENTHERBERG, Norbert, 67346 Speyer (DE); LONGO, Daniela, 53721 Siegburg (DE); HAHN, Klaus, 67281 Kirchheim (DE); HOLMES, Keith, A., Cary North Carolina 27519 (US); KLEIN, Clark, D., Pittsboro North Carolina 27312 (US); SCHMIED, Bernhard, 67227 Frankenthal (DE)
(86) Internationale Anmeldenummer: PCT/EP2008/067962
(87) Internationale Veröffentlichungsnummer: WO 2009/080723

(56) Entgegenhaltungen:
- EP-A- 0 981 956
- US-A- 3 789 028
- US-B1- 6 667 350
- DATABASE WPI Week 200012 Thomson Scientific, London, GB; AN 2000-130575 XP002518430 & JP 2000 001564 A (HITACHI CHEM CO LTD) 7. Januar 2000 (2000-01-07) in der Anmeldung erwähnt
- DATABASE WPI Week 199816 Thomson Scientific, London, GB; AN 1998-175034 XP002518431 & JP 10 036549 A (SHINTO TORYO KK) 10. Februar 1998 (1998-02-10)
- DATABASE WPI Week 198848 Thomson Scientific, London, GB; AN 1988-341922 XP002518432 & JP 63 254143 A (IMAKITA T) 20. Oktober 1988 (1988-10-20)
- DATABASE WPI Week 199954 Thomson Scientific, London, GB; AN 1999-629368 XP002518433 & JP 11 279321 A (SEKISUI PLASTICS CO LTD) 12. Oktober 1999 (1999-10-12)

## Beschreibung

Die Erfindung betrifft insektizid ausgerüstete Partikel aus expandierbarem Polystyrol, daraus erhältliche insektizide Formteile, Verfahren zu deren Herstellung sowie deren Verwendung im Bauwesen.

Polymerschäume werden z.B. in der Bauindustrie als Isolationsmaterial unter- und oberirdisch verwendet. Insekten, insbesondere Termiten können solche Schäume durch Fraß substanziell schädigen, sodass die lsolationswirkung sowie die mechanische Stabilität der Formkörper eingeschränkt werden und ein weiteres Vordringen der Schädlinge ermöglicht wird. Vielfach schreiben auch gesetzliche Vorschriften einen insektiziden Schutz von Polymerschäumen vor, da solche Isolationsmaterialien einen bevorzugten Lebensraum für Termiten bieten.

Die JP-2000-001564 beschreibt den Einsatz von (±)-5-Amino-1-(2,6-dichlor-α,α,α,-trifluor-p-tolyl)-4-trifluormethylsulfinylpyrazol (*Common Name:* Fipronil) zum Schutz von Polymerschäumen. Fipronil wird dazu in Konzentrationen von 0,001-1 Gew.-% eingesetzt. Als Polymermatrix werden Polystyrol, Polyethylen und Polypropylen beschrieben. Die Einarbeitung des Fipronils erfolgt durch Auftragen auf die Oberfläche des fertigen Formteils, durch Auftragen auf die Oberfläche der vorgeschäumten Schaumstoffpartikel oder durch Auftragen auf das Treibmittel enthaltende Granulat.

In JP 2001-259271 ist ein Verfahren beschrieben, bei dem treibmittelhaltiges EPS Granulat oder vorgeschäumtes EPS-Granulat mit Fipronil und einem Binder beschichtet wird. Bei den genannten Verfahren kann es während der Herstellung zu unerwünschtem Abrieb und Staubbildung kommen. Da solcher Abrieb bzw. Staub hohe Mengen an Wirkstoff enthält, ist mit einer unerwünschten Exposition sowie mit Wirkstoffverlust während der Herstellung, Verarbeitung und/oder Verwendung zu rechnen.

Es bestand somit die Aufgabe, die in JP-2000-001564 und JP 2001-259271 beschriebenen Verfahren hinsichtlich der unerwünschten Exposition und des Wirkstoffverlusts während der Verarbeitung zu verbessern. Insbesondere bestand die Aufgabe, insektizid ausgerüstete Partikel aus expandierbarem Polystyrol (EPS-Partikel) bereitzustellen, die während der Herstellung, Verarbeitung und Verwendung zu einer geringeren Exposition mit Wirkstoff und somit zu einem geringeren Wirkstoffverlust führen.

Die Aufgabe wird gelöst durch eine Beschichtung der Partikel, die neben einem oder mehreren Insektiziden mindestens einen Glycerinester und optional ein oder mehrere Bindemittel enthält.

Gegenstand der Erfindung sind daher Partikel aus expandierbarem Polystyrol (EPS), beschichtet mit
(A) einem oder mehreren Insektizid/en,
(B) einem oder mehreren Glycerinester/n,
(C) gegebenenfalls einem oder mehreren Binder/n und
(D) gegebenenfalls weiteren Additiven.

Weiterhin Gegenstand der Erfindung sind insektizide, geschäumte Formteile, erhältlich aus den erfindungsgemäßen Partikeln.

Ebenso Gegenstand der Erfindung ist ein Verfahren zur Herstellung eines erfindungsgemäßen Formteils durch Verpressen, wobei man
I) erfindungsgemäße EPS-Partikel in eine gasdurchlässige Form einfüllt,
II) die eingefüllten Partikel in der geschlossenen Form unter Volumenreduktion zu einem Pressling verpresst,
III) den Pressling durch Temperieren auf 20 bis 100°C aushärtet, und
IV) das erhaltene Formteil aus der Form entnimmt.

Weiterhin Gegenstand der Erfindung ist ein Verfahren zur Herstellung der erfindungsgemäßen Formteile durch Ausschäumen, wobei man
i) erfindungsgemäße EPS-Partikel gemäß in eine gasdichte Form einfüllt,
ii) die eingefüllten Partikel in der geschlossenen Form durch Temperieren auf 60 bis 120°C ausschäumt, wobei die Partikel zu dem Formteil verschweißen, und
iii) das erhaltene Formteil aus der Form entnimmt.

Ebenso Gegenstand der Erfindung ist die Verwendung von erfindungsgemäßen Formteilen als Isolationsmaterial in der Bauindustrie und/oder zum Schutz von Gebäuden gegen Termiten, sowie ein Verfahren zum Schutz eines Gebäudes gegen Termiten, wobei erfindungsgemäße Formteile in das Fundament, die Außenwände oder das Dach des zu schützenden Gebäudes eingebaut werden.

Die erfindungsgemäße Beschichtung von EPS-Partikeln führt zu einer Verbesserung der Abriebfestigkeit der insektiziden Beschichtung des EPS-Partikels und des daraus erhältlichen Formteils. Darüber hinaus wurde gefunden, dass die erfindungsgemäßen EPS-Partikel und die daraus erhältlichen Formteile eine verbesserte insektizide Wirksamkeit gegenüber EPS-Partikeln und daraus erhältlichen Formteilen aufweisen, die entsprechend dem Stand der Technik behandelt wurden. Dadurch ist eine Verringerung der Insektizidmenge möglich, wodurch ein ökonomischeres und ökologischeres Beschichtungsverfahren realisiert wird.

Darüber hinaus weisen die erfindungsgemäßen Formteile keine Nachteile in den mechanischen und Isolationseigenschaften im Vergleich zu einem Standardprodukt (ohne Insektizid) auf.

Im Sinne der Erfindung wird EPS als Sammelbegriff für Homo- und Copolymere aus Styrol, anderen vinylaromatischen Monomeren und gewünschtenfalls weiteren Comonomeren verwendet. Unter EPS sind beispielsweise Standard-Polystyrol (General Purpose Polystyrene, GPPS, üblicherweise glasklar), schlagzähes Polystyrol (High Impact Polystyrene, HIPS, enthaltend z.B. Polybutadien- oder Polyisoprenkautschuk), Styrol-Maleinsäure(anhydrid)-Polymerisate, Acrylnitril-Butadien-Styrol-Polymerisate (ABS), Styrol-Acrylnitril-Polymerisate (SAN), oder deren Mischungen, zu verstehen (Komponente K1). Bevorzugtes EPS ist Standard-Polystyrol, das im Wesentlichen (vorzugsweise zu mindestens 95 mol%, bezogen auf den Monomeranteil) auf Styrol beruht.

Weiterhin umfasst EPS auch Blends aus einem oder mehreren der vorgenannten Polymere (Komponente K1) mit einem oder mehreren thermoplastischen Polymeren (Komponente K2) wie zum Beispiel Polyphenylenethern (PPE), Polyamiden (PA), Polyolefinen, wie Polypropylen (PP) oder Polyethylen (PE), Polyacrylaten, wie Polymethylmethacrylat (PMMA), Polycarbonaten (PC), Polyestern, wie Polyethylenterephthalat (PET) oder Polybutylenterephthalat (PBT), Polyethersulfonen (PES), Polyetherketonen (PEK) oder Polyethersulfiden (PES). Ein bevorzugtes thermoplastisches Polymer ist Polyamid (PA).

Die genannten Polymere der Komponente K1 sind erhältlich durch Polymerisation von einem oder mehreren vinylaromatischen Monomeren, wie Styrol und α-Methylstyrol, und gewünschtenfalls weiteren Comonomeren, wie Dienen, α,β-ungesättigten Carbonsäuren, Estern (bevorzugt Alkylestern) oder Amiden dieser Carbonsäuren und Alkene.

Vorzugsweise wird als vinylaromatisches Monomer mindestens eine Verbindung der allgemeinen Formel (I) gewählt, 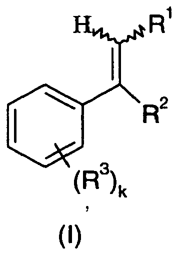 worin R¹ und R² unabhängig voneinander jeweils für Wasserstoff, Methyl oder Ethyl stehen;
R³ für Wasserstoff, C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; bevorzugt C₁-C₄-Alkyl wie Methyl, Ethyl, n-Propyl, iso-Propyl, n-Butyl, iso-Butyl, sec.-Butyl und tert.-Butyl steht; und
k für eine ganze Zahl von 0 bis 2 steht.

Bevorzugt sind R¹ und R² jeweils Wasserstoff, und mehr bevorzugt gilt k = 0. Styrol ist insbesondere bevorzugt; außerdem sind auch α-Methylstyrol, p-Methylstyrol, Ethylstyrol, tert.-Butylstyrol, Vinylstyrol, Vinyltoluol, 1,2-Diphenyl-ethylen, 1,1-Diphenylethylen oder deren Mischungen besonders geeignet.

Als Diencomonomere kommen alle polymerisierbaren Diene in Betracht, insbesondere 1,3-Butadien, 1,3-Pentadien, 1,3-Hexadien, 2,3-Dimethylbutadien, Isopren, Piperylen oder Mischungen davon. Bevorzugt sind 1,3-Butadien (kurz: Butadien), Isopren oder deren Mischungen.

Als α,β-ungesättigte Carbonsäure bzw. deren Derivate eignen sich bevorzugt Verbindungen der allgemeinen Formel (II), 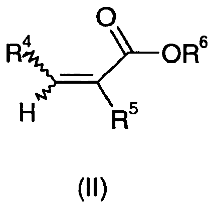 worin die Symbole folgende Bedeutungen haben:
R⁵ wird gewählt aus der Gruppe bestehend aus
   - unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl,'iso-Butyl, sec.-Butyl und tert.-Butyl;
   - oder Wasserstoff,
   - ganz besonders bevorzugt sind Wasserstoff und Methyl;
R⁴ wird gewählt aus der Gruppe bestehend aus
   - unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl,
   - ganz besonders bevorzugt ist Wasserstoff;
R⁶ wird gewählt aus der Gruppe bestehend aus
   - Wasserstoff (womit Verbindung (II) die Carbonsäure selbst ist),
   - oder unverzweigtem oder verzweigtem C₁-C₁₀-Alkyl (womit Verbindung (II) ein Carbonsäureester ist), wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Hep-tyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl; sowie 2-Ethylhexyl.

Bevorzugte Verbindungen der Formel (II) sind Acrylsäure und Methacrylsäure. Weiterhin bevorzugt sind die C₁-C₁₀-Alkylester der Acrylsäure, insbesondere die Butylester, vorzugsweise n-Butylacrylat, und die C₁-C₁₀-Alkylester der Methacrylsäure, insbesondere Methylmethacrylat (MMA).

Als Carbonsäureamide eignen sich insbesondere die Amide der vorgenannten Verbindung (II), beispielsweise Acrylsäureamid und Methacrylsäureamid.
Als Monomere ebenfalls in Betracht kommen Verbindungen der allgemeinen Formel (IIIa) und (IIIb), wobei es sich bei den Verbindungen (IIIa) formal um OH-substituierte Carbonsäureamide handelt: 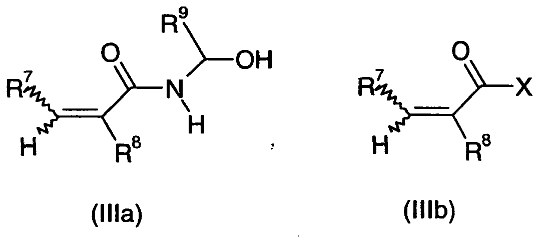 worin die Symbole folgendes bedeuten:
R⁸ wird gewählt aus der Gruppe bestehend aus
   - unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
   - oder Wasserstoff;
   - ganz besonders bevorzugt sind Wasserstoff und Methyl;
R⁷ wird gewählt aus der Gruppe bestehend aus
   - unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl.
   - ganz besonders bevorzugt ist Wasserstoff;
R⁹ wird gewählt aus
   - unverzweigtem oder verzweigtem C₁-C₁₀-Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl;
   - ganz besonders bevorzugt ist Wasserstoff;
X wird gewählt aus der Gruppe bestehend aus
   - Wasserstoff,
   - Glycidyl,
   - Gruppen mit tertiären Aminogruppen, vorzugsweise NH(CH₂)_{b}-N(CH₃)₂, wobei b eine ganze Zahl im Bereich von 2 bis 6'ist,
   - enolisierbaren Gruppen mit 1 bis 20 C-Atomen, vorzugsweise Acetoacetyl, der Formel 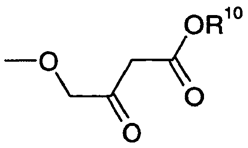
   wobei
R¹⁰ gewählt wird aus unverzweigtem oder verzweigtem C₁-C₁₀₋Alkyl, wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-methylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl.

Ganz besonders bevorzugt ist R⁸ in Formel (IIIa) bzw. (IIIb) gewählt aus Wasserstoff und Methyl und R⁷ und R⁹ sind jeweils Wasserstoff.

Insbesondere bevorzugt als Verbindung der Formel (IIIa) ist Methylolacrylamid.

Das EPS kann auch unter Verwendung von Alkenen als Comonomere hergestellt werden. Als Alkene eignen sich insbesondere Ethylen (Ethen) und Propylen (Propen).

Weitere geeignete Comonomere zur Herstellung der Komponente K1 sind beispielsweise jeweils 1 bis 5 Gew.-% (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure (verzweigt oder unverzweigt) oder das Natriumsalz der Vinylsulfonsäure.

Die EPS-Partikel können nach bekannten dem Fachmann geläufigen Verfahren wie zum Beispiel durch
- V1: Suspensionspolymerisation von Styrol oder anderer vinylaromatischer Monomere oder Comonomere in Gegenwart von Treibmitteln, wodurch unmittelbar treibmittelhaltige EPS-Partikel entstehen,
- V2: Imprägnieren von treibmittelfreien Polystyrolpartikeln mit dem Treibmittel unter Druck in einer erhitzten Suspension, wobei das Treibmittel in die erweichten Partikel diffundiert (beim Abkühlen der Suspension unter Druck erhält man treibmittelhaltige EPS-Partikel) oder '
- V3: Einmischen des Treibmittels in eine Polystyrolschmelze mittels eines Extruders oder einer anderen Mischvorrichtung (die treibmittelhaltige Schmelze wird unter Druck ausgetragen und z.B. mittels Unterwasserdruckgranulierung zu EPS-Partikeln granuliert)
hergestellt werden.

Die nach einem der Verfahren V1, V2 oder V3 erhältlichen EPS-Partikel können nach üblichen Verfahren abgetrennt, gewaschen und getrocknet werden.

Als erfindungsgemäße EPS-Partikel eignen sich kompakte EPS-Partikel und vorgeschäumte EPS-Partikel (bevorzugt sind vorgeschäumte EPS-Partikel).

Als Treibmittel, eignen sich die üblicherweise in EPS-Partikeln eingesetzten physikalischen Treibmittel, wie aliphatischen Kohlenwasserstoffe mit 2 bis 8 Kohlenstoffatomen, Alkohole, Ketone, Ether oder halogenierten Kohlenwasserstoffe oder Wasser, oder deren Mischungen. Bevorzugt werden iso-Butan, n-Butan, iso-Pentan, n-Pentan oder deren Mischungen eingesetzt.

Die Menge des eingesetzten Treibmittels beträgt 0,5 bis 15 Gew.%, bevorzugt 1 bis 10 Gew.%, und insbesondere 2 bis 8 Gew.%, bezogen auf das eingesetzte vinylaromatische Monomer.

Das EPS kann weitere Additive enthalten. Erfindungsgemäß wird der Begriff Additive als Sammelbegriff für Hilfsstoffe gebraucht, die bei der Polymerisation, bevorzugt bei der Suspensionspolymerisation, zum Einsatz kommen, zum Beispiel Keimbildner, Weichmacher, Flammschutzmittel, IR-Absorber wie Ruß, Graphit, Aluminiumpulver, Titandioxid, lösliche und unlösliche Farbstoffe sowie Pigmente. Bevorzugte Additive sind Graphit und Ruß. Der bevorzugte Anteil an Graphit beträgt 0,05 bis 25 Gew.-%, besonders bevorzugt 2 bis 8 Gew.-%, jeweils bezogen auf das Gesamtgewicht des EPS. Die mittlere Größe der Graphitpartikel beträgt vorzugsweise 1 bis 50 µm, besonders bevorzugt 2 bis 10 µm.

In einer Ausführungsform wird das erfindungsgemäße EPS eingefärbt, um eine leichte Unterscheidung zu nicht insektizid ausgerüstetem EPS zu ermöglichen und somit die Produktsicherheit zu erhöhen.

Aufgrund der Brandschutzbestimmungen in der Bau- und anderen Industrien enthält das erfindungsgemäße EPS vorzugsweise ein oder mehrere Flammschutzmittel.

Ein geeignetes Flammschutzmittel ist beispielsweise Hexabromcyclododecan (HBCD), insbesondere die technischen Produkte, welche im Wesentlichen das α-, β- und γ-Isomer und vorzugsweise einen Zusatz von Dicumylperoxid als Synergisten enthalten.

Weitere geeignete Flammschutzmittel sind beispielsweise Tetrabrombisphenol-A-diallylether, Blähgraphit, roter Phosphor, Triphenylphosphat und 9,10-Dihydro-9-oxa-10-phosphaphenanthren-10-oxid.

Die EPS-Partikel enthalten erfindungsgemäß eine Beschichtung umfassend,
(A) mindestens ein Insektizid,
(B) mindestens einen Glycerinester,
(C) gewünschtenfalls einen oder mehrere Binder und
(D) gegebenenfalls weitere Additive.

Der Begriff "Insektizide" umfasst im Sinne der Erfindung Arthropodizide (Insektizide und Acarizide) und Nematizide.

Geeignete Insektizide sind dem Fachmann grundsätzlich bekannt und beispielsweise beschrieben in C.D.S. Tomlin (Hsrg), The Pesticide Manual, 14. Auflage, The British Crop Protection Council 2006.

Bevorzugt sind Insektizide aus der Gruppe:
I.1. GABA Antagonist Verbindungen: Acetoprole, Endosulfan, Ethiprole (III), Fipronil (II), Vaniliprole, Pyrafluprole, Pyriprole; Phenylpyrazol-Verbindung der Formel (VI), (s.u);
1.2. Carbamate: Alanycarb, Aldicarb, Bendiocarb, Benfuracarb, Carbaryl, Carbofuran, Carbosulfan, Fenoxycarb, Furathiocarb, Methiocarb, Methomyl, Oxamyl, Pirimicarb, Propoxur, Thiodicarb, Triazamate;
1.3. Pyrethroide: Allethrin, Bifenthrin, Cyfluthrin, Cyhalothrin, Cyphenothrin, Cypermethrin, alpha-Cypermethrin, beta-Cypermethrin, zeta-Cypermethrin, Deltamethrin, Esfenvalerate, Etofenprox, Fenpropathrin, Fenvalerate, Imiprothrin, lambda-Cyhalothrin, Permethrin, Prallethrin, Pyrethrin I und II, Resmethrin, Silafluofen, tau-Fluvalinate, Tefluthrin, Tetramethrin, Tralomethrin, Transfluthrin, Profluthrin, Dimefluthrin;
1.4. Wachstumsregulatoren: a) Chitin Synthese Hemmer: Benzoylharnstoffe: Chlorfluazuron, Diflubenzuron, Flucycloxuron, Flufenoxuron, Hexaflumuron, Lufenuron, Novaluron, Noviflumuron, Sulfluramid, Teflubenzuron, Teflumoron, Buprofezin, Diofenolan, Hexythiazox, Etoxazole, Clofentazine; b) Ecdysone Antagonisten: Haliofenozide, Methoxyfenozide, Tebufenozide, Azadirachtin; c) Juvenoide: Pyriproxyfen, Methoprene, Fenoxycarb; d) Lipid Biosynthese Hemmer: Spirodiclofen, Spiromesifen, Spirotetramat;
1.5. Nicotin Rezeptor Agonist/Antagonist Verbindungen: Acetamiprid, Clothianidin, Dinotefuran, Imidacloprid, Nitenpyram, Thiacloprid, Thiamethoxam;
1.6. Organo(thio)phosphate: Acephate, Azamethiphos, Azinphos-methyl, Chlorpyrifos, Chlorpyrifos-methyl, Chlorfenvinphos, Diazinon, Dichlorvos, Dicrotophos, Dimethoate, Disulfoton, Ethion, Fenitrothion, Fenthion, Isofenphos, Isoxathion, Malathion, Methamidophos, Methidathion, Methyl-parathion, Mevinphos, Monocrotophos, Oxydemetonmethyl, Paraoxon, Parathion, Phenthoate, Phosalone, Phosmet, Phosphamidon, Phorate, Phoxim, Pirimiphos-methyl, Profenofos, Prothiofos, Sulprophos, Tetrachlorvinphos, Terbufos, Tolazophos, Trichlorfon;
1.7. Makrocyclische Lacton Insektizide: Abamectin, Emamectin, Milbemectin, Lepimectin, Spinosad;
1.8. Site-I-Elektronentransportinhibitoren: zum Beispiel Fenazaquin, Pyridaben, Tebufenpyrad, Tolfenpyrad;
I.9. Site-II- und Site-III-Elektronentransportinhibitoren:
   Acequinocyl, Fluacyprim, Hydramethylnon (V);
1.10. Uncoupler Verbindungen: Chlorfenapyr (VI);
I.11. Oxidative Phosphorylierung hemmende Verbindungen: Cyhexatin, Diafenthiuron, Fenbutatin Oxid, Propargite;
I.12. Inhibitoren der Chitinbiosynthese:
   Cyromazine;
I.13. Gemischtfunktionale Oxidase Inhibitor Verbindungen:
   Piperonyl Butoxide;
I.14. Natrium-Kanal-Mondulatoren:
   Indoxacarb, Metaflumizone;
I.15. Wirkstoffe mit unbekannten oder nicht spezifischen Wirkmechanismen:
   Benclothiaz, Bifenazate, Borate, Cartap, Chlorantraniliprole, Flonicamid, Pyddalyl, Pymetrozine, Schwefel, Thiocyclam, Flubendiamide, Cyenopyrafen, Cyflumetofen, Flupyrazofos, Amidoflumet;

Die kommerziell erhältlichen Verbindungen der Gruppe 1.1 bis I.15 können in "The Pesticide Manual", 14th Edition, British Crop. Protection Council (2006) gefunden werden.

Lepimectin ist aus *"Agro Project",* PJB Publications Ltd, November 2004 bekannt. Benclothiaz und seine Herstellung wird in EP-A1 454621 beschrieben. Methidathion und Paraoxon und deren Herstellung ist in "Farm Chemicals Handbook"; Volume 88, Meister Publishing Company, 2001 beschrieben. Acetoprole und seine Herstellung wird in WO 98/28277 beschrieben. Flupyrazofos wird in "Pesticide Science" 54, 1988, Seiten 237-243 und in US 4822779 beschrieben. Pyrafluprole und seine Herstellung wird in JP 2002193709 und in WO 01/00614 beschrieben. Pyriprole und seine Herstellung ist in WO 98/45274 und in US 6335357 beschrieben. Amidoflumet und seine Herstellung ist in US 6221890 und in JP 21010907 beschrieben. Flufenerim und seine Herstellung ist in WO 03/007717 und in WO 03/007718 beschrieben. Cyflumetofen und seine Herstellung ist in WO 04/080180 beschrieben.

Weitere bevorzugte Insektizide sind Amidrazone der Formel (IV), 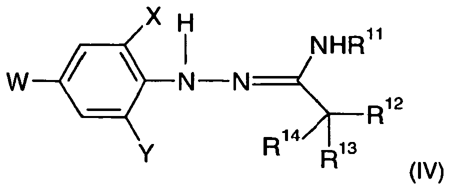 wobei die Symbole folgende Bedeutung haben:
- W: ist Cl oder CF₃;
- X, Y: sind gleich oder verschieden Cl oder Br;
- R¹¹: ist (C₁-C₆)-Alkyl, (C₃-C₆)-Alkenyl, (C₃-C₆)-Alkinyl oder (C₃-C₆)-Cycloalkyl, das mit 1 bis 3 Halogenatomen substituiert sein kann, oder (C₂-C₄)-Alkyl, das mit (C₁-C₄)-Alkoxy substituiert ist;
- R¹², R¹³: sind (C₁-C₆)-Alkyl oder bilden zusammen mit dem Kohlenstofifatom, an das sie gebunden sind, (C₃-C₆)-Cycloalkyl, das mit 1 bis 3 Halogenatomen substituiert sein kann;
- R¹⁴: ist H oder (C₁-C₆)-Alkyl,
sowie Enantiomere und Salze davon.

Bevorzugt haben die Symbole in der Formel (IV) folgende Bedeutungen:
- R¹¹: ist bevorzugt (C₁-C₄)-Alkyl, insbesondere Methyl oder Ethyl;
- R¹² und R¹³: sind bevorzugt Methyl oder bilden mit dem Kohlenstoffatom, an das sie gebunden sind, einen Cyclopropylring, der ein oder zwei Chloratome tragen kann;
- R¹⁴: ist bevorzugt (C₁-C₄)-Alkyl, insbesondere Methyl;
- W: ist bevorzugt CF₃;
- X, Y: sind bevorzugt Cl.

Weiterhin bevorzugte Verbindungen der Formel (IV) sind solche, in denen X und Y Cl, W CF₃, R¹², R¹³ und R¹⁴ Methyl und R¹¹ Methyl oder Ethyl bedeuten, wie auch solche Verbindungen, bei denen X, Y Cl, W CF₃, R¹², R¹³ zusammen mit dem Kohlenstoffatom, an das sie gebunden sind, eine 2,2-Dichlorcyclopropylgruppe bilden, R¹⁴ Methyl und R¹¹ Methyl oder Ethyl bedeuten. Diese Verbindungen und deren Herstellung sind beispielsweise in der US 2007/0184983 beschrieben.

Besonders bevorzugt sind Insektizide aus der Gruppe:
I.1 Acetoprole, Ethiprole (III), Fipronil (II), Vaniliprole;
I.2 Carbaryl;
I.3 Bifenthrin, Cyfluthrin, Cyhalothrin, Cypermethrin, alpha-Cypermethrin, Deltamethrin, Fenvalerate, lambda-Cyhalothrin, Permethrin;
1.4 Diflubenzuron, Flufenoxuron, Hexaflumuron, Noviflumuron, Sulfluramid;
I.5 Acetamiprid, Imidacloprid, Thiacloprid, Thiamethoxam;
I.6 Chlorpyrifos, Fenitrothion, Isofenphos;
I.7 Spinosad;
I.8. Site-I-Elektronentransportinhibitoren: zum Beispiel Fenazaquin, Pyridaben, Tebufenpyrad, Tolfenpyrad;
I.9. Hydramethylnon (V);
I.10. Chlorfenapyr (VI);
I.11. Oxidative Phosphorylierung hemmende Verbindungen: Cyhexatin, Diafenthiuron, Fenbutatin Oxid, Propargite;
I.12. Inhibitoren der Chitinbiosynthese:
   Cyromazine;
I.13. Gemischtfunktionale Oxidase Inhibitor Verbindungen:
   Piperonyl Butoxide;
I.14. Indoxacarb, Metaflumizone;
I.15. Borate, Chlorantraniliprol, Flonicamid;

Ganz besonders bevorzugt sind Insektizide aus der Gruppe der Phenylpyrazole, bevorzugt Fipronil (V), Acetoprole, Ethiprole (VI) und die Verbindung der Formel (VII), insbesondere bevorzugt Fipronil, Chlorfenapyr (VIII) und Hydramethylnon (IX)

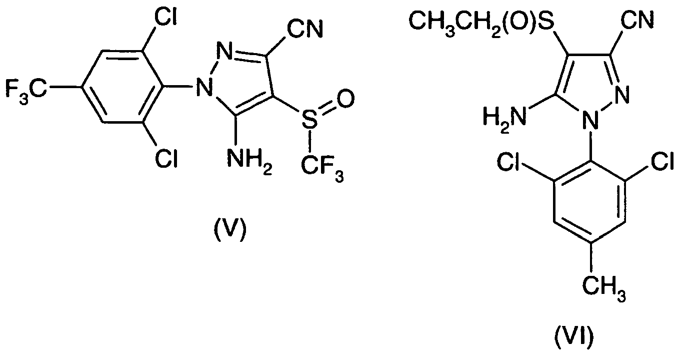

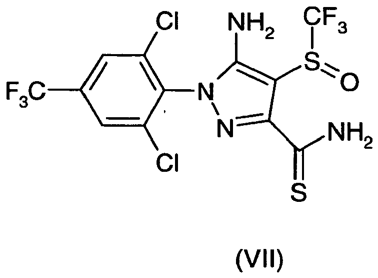

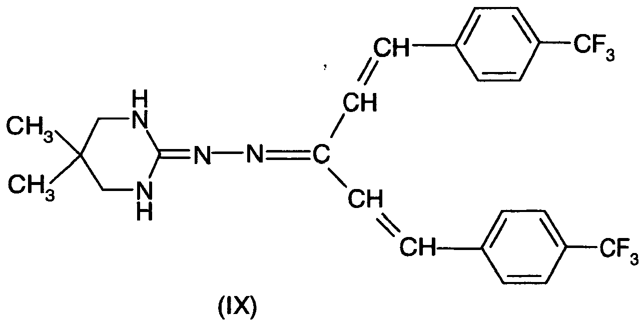

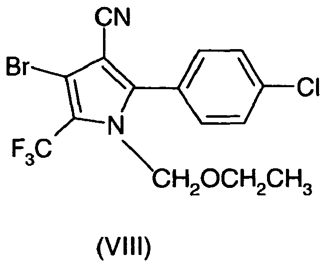

Insbesondere bevorzugt ist Fipronil.

Bevorzugt als Mischungspartner von Fipronil sind Pyrethroide (1.3), Nicotin Rezeptor Agonist/Antagonisten (1.5), Borate, Carbaryl, Chlorantraniliprole, Chlorpyrifos, Diflubenzuron, Fenitrothion, Flonicamid, Flufenoxuron, Hexaflumuron, Indoxacarb, Isofenphos, Noviflumuron, Metaflumizone, Spinosad und Sulfluramid. Besonders bevorzugt sind Acetamiprid, Bifenthrin, Cyfluthrin, Cyhalothrin, Cypermethrin, alpha-Cypermethrin, Deltamethrin, Fenvalerate, Imidacloprid, lambda-Cyhalothrin, Permethrin, Thiacloprid und Thiamethoxam. Insbesondere bevorzugt ist alpha-Cypermethrin.

Das Mischungsverhältnis zwischen den erfindungsgemäß eingesetzten Insektiziden und gegebenenfalls weiteren Mischungspartnern kann in weiten Grenzen variieren und beträgt im Allgemeinen 0,1:100 bis 100:0,1.

Das Insektizid kann als Reinstoff (zum Beispiel als technischer oder reiner Wirkstoff) eingesetzt werden. Der Einsatz handelsüblicher Formulierungen ist ebenfalls möglich.

Geeignete Konzentrationen des Insektizids oder der Insektizidmischung bezogen auf das EPS werden so gewählt, dass die daraus erhältlichen Formteile Konzentrationen von 10 bis 1000 ppm, besonders bevorzugt von 20 bis 1000 ppm und ganz besonders bevorzugt von 50 bis 500 ppm aufweisen.

Die erfindungsgemäße Beschichtung kann neben dem Insektizid ein Bindemittel enthalten. Geeignete polymere Binder sind z.B. Acrylatharze, wässrige Polymerdispersionen oder Wachse.
Besonders bevorzugt sind Polymerdispersionen. Die Polymerdispersionen sind aus den zur Herstellung der Komponente K1 aufgezeigten Monomeren zugänglich. Außerdem kann man zur Herstellung der Polymerdispersion Comonomere mitverwenden, beispielsweise jeweils 1 bis 5 Gew.-% (Meth)acrylnitril, (Meth)acrylamid, Ureido(meth)acrylat, 2-Hydroxyethyl(meth)acrylat, 3-Hydroxypropyl(meth)acrylat, Acrylamidpropansulfonsäure (verzweigt oder unverzweigt) oder das Natriumsalz der Vinylsulfonsäure. Die Polymerdispersion kann auch unter Verwendung von Alkenen hergestellt werden. Als Alkene eignen sich insbesondere Ethylen (Ethen) und Propylen (Propen). Man kann ein Homopolymer verwenden, beispielsweise eine Dispersion von Polyethylen oder Polypropylen, oder - bevorzugt - alkenhaltige Copolymere. Gut geeignet sind z.B. Coplymere aus Propylen und Carbonsäuren bzw. Carbonsäureverbindungen der obigen Formel I, beispielsweise Acrylsäure oder Methacrylsäure oder den genannten Acrylsäurealkylestern oder Methacrylsäurealkylestern. Derartige Produkte sind beispielsweise als Poligen® von BASF erhältlich. Eine geeignete Polymerdispersion ist z.B. eine solche aus Propylen-Alkyl-acrylat-Copolymer.

Bevorzugte wässrige Polymerdispersionen enthalten ein Polymer auf Basis von
i) Styrol,
ii) n-Butylacrylat, MMA, Methacrylsäure, Acrylamid und Methylolacrylamid,
iii) Styrol und den bei ii) genannten Monomeren

Die Herstellung der Polymerdispersion erfolgt nach bekannten und dem Fachmann geläufigen Methoden, etwa durch Emulsions-, Suspensions- oder Dispersionspolymerisation in flüssiger Phase.

Die Polymerdispersion kann unvernetzt oder vernetzt sein und weist bevorzugt eine Glastemperatur von -60 bis +140 °C auf, insbesondere zwischen -20 und +80°C (bestimmt mittels Differential Scanning Analysis (DSC)).

Bei der Binderauswahl hat es sich als vorteilhaft erwiesen, solche zu nutzen, die nicht zu einem Verkleben der zu beschichtenden EPS-Partikel, wie zum Beispiel EPS Granulate oder vorgeschäumte EPS-Perlen. Um diesen Anforderungen zu genügen, kommen vorzugsweise diejenigen Binder in Betracht, welche eine Filmbildungstemperatur (MFT) zwischen -20 und +45°C, insbesondere zwischen -5 und 35°C besitzen.

Es eignen sich weiterhin als Binder Wachse, wie Polyethylenwachse, oxidierte Polyethylenwachse, Ethylen-Copolymer-Wachse, Montanwachse und Polyetherwachse.

Für die Einsatzmenge des Binders hat es sich als geeignet erweisen, wenn der EPS-Partikel mit 0,005 - 4,0 Gew.-% Binder beschichtet wird. Bevorzugt wird der EPS-Partikel mit 0,01 - 2,0 Gew.% Binder, bezogen auf das Gewicht des beschichteten EPS-Partikels, beschichtet (die Gew.-% Angaben beziehen sich auf den Feststoffgehalt des zur Beschichtung verwendeten Binders).

Als Glycerinester wird mindestens eine Verbindung der allgemeinen Formel (X) gewählt 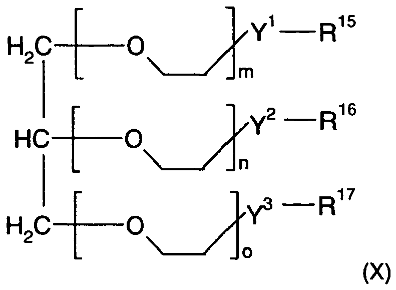 worin die Symbole und Indizes folgende Bedeutungen haben:
m, n, o sind unabhängig voneinander ganze Zahlen von 0 bis 10;
Y¹, Y² und Y³ bedeuten unabhängig voneinander -O-, -S- oder -NR¹⁸-;
R¹⁸ ist Wasserstoff, C₁-C₁₀-Alkyl;
R¹⁵, R¹⁶ und R¹⁷ sind unabhängig voneinander Wasserstoff, -SO R¹⁹, -SO₂ R¹⁹, -SO₃ R¹⁹ oder -COR¹⁹;
R¹⁹ ist Wasserstoff, C₁-C₃₀-Alkyl, wobei der Alkylrest geradkettig oder verzweigt ist, gesättigt ist oder ein oder mehrere C-C-Doppel- oder C-C-Dreifachbindungen enthält und unsubstituiert oder mit einem oder mehreren Resten aus der Gruppe Hydroxyl, Oxo und COOR²⁰ (wobei R²⁰ C₁-C₆-Alkyl bedeutet) substituiert ist.

Bevorzugt sind m, n und o null, Y¹, Y² und Y³ -O- und R¹⁵, R¹⁶ und R¹⁷ unabhängig voneinander Wasserstoff, Formyl, Acetyl, Propionyl, Butyryl, Isobutyryl, Valeryl, Isovaleryl, Pivaloyl, Capronoyl, Capryloyl, Caprinoyl, Lauroyl, Myrisitoyl, Palmitoyl, Stearoyl, 12-Hydroxystearoyl, Arachinoyl, Behenoyl, Lignocerinoyl, Cerotinoyl, Mellisinoyl, Oleyl, Ricinoyl (Ricinol), Erucaoyl, Sorbinoyl, Linoloyl, Linolenoyl oder Eläostearinoyl.

Besonders bevorzugt sind daher m, n und o null, Y¹, Y² und Y³ -O- und R¹⁵, R¹⁶ und R¹⁷ unabhängig voneinander Wasserstoff, Lauroyl, Myrisitoyl, Palmitoyl, Stearoyl, 12-Hydroxystearoyl, Oleyl, Ricinoyl (Ricinol), Erucaoyl, Sorbinoyl, Linoloyl oder Linolenoyl.

Weiter besonders bevorzugt sind die Mono-, Di- und Triglyceride, die aus Glycerin und Stearinsäure, Glycerin und 12-Hydroxystearinsäure und Glycerin und Ricinolsäure erhältlich sind, sowie gemischte Di- und Triglyceride, die neben Stearinsäure, 12-Hydroxystearinsäure und Ricinolsäure aus einer oder zwei Fettsäuren aus der Gruppe Ölsäure, Linolsäure, Linolensäure und Palmitinsäure erhältlich sind.

Besonders bevorzugt sind auch die entsprechenden Handelsprodukte, welche im Allgemeinen Mischungen der entsprechenden Mono-, Di- und Triester darstellen, die auch geringe Anteile an freiem Glycerin und freien Fettsäuren enthalten können, wie beispielsweise Ricinusöl (Castor Oil) und durch teilweise oder vollständige Hydrierung von Ricinusöl erhältliche Folgeprodukte, wie Ricinenöl (Castor Wax).

Für die Einsatzmenge des Glycerinesters hat es sich als geeignet erweisen, wenn das EPS mit 0,01 - 1,0 Gew.-% Glycerinester beschichtet wird. Bevorzugt wird das EPS mit 0,1 bis 0,6 Gew.% Glycerinester, insbesondere mit 0,2 bis 0,5 Gew.% Glycerinester, bezogen auf das Gewicht des beschichteten EPS-Partikels, beschichtet.

Die Beschichtung kann weitere Zusatzstoffe, wie Antistatika, Hydrophobisierungsmittel, Flammschutzmittel, feinteilige Kieselsäure und anorganische Füllstoffe enthalten. Der Anteil dieser Mittel hängt von des Art und Wirkung ab und beträgt für anorganische Füllstoffe in der Regel 0 bis 10 Gew.%, bezogen auf beschichtete EPS-Partikel.

Als Beschichtungsmittel eignen sich amphiphile oder hydrophobe organische Verbindungen. Unter den hydrophoben organischen Verbindungen sind insbesondere C₁₀-C₃₀-Parafinwachse, Umsetzungsprodukte aus N-Methylolamin und einem Fettsäurederivat, Umsetzungsprodukte eines C₉-C₁₁-Oxoalkohols mit Ethylenoxid, Propylenoxid oder Butylenoxid oder Polyfluoralkly(meth)acrylate oder Mischungen davon zu nennen, die vorzugsweise in Form wässriger Emulsionen eingesetzt werden können.

Bevorzugte Hydrophobierungsmittel sind Paraffinwachse mit 10 bis 30 C-Atomen in der Kohlenstoffkette, die vorzugsweise einen Schmelzpunkt zwischen 10 und 70 °C, insbesondere zwischen 25 und 60 °C, aufweiseh. Derartige Paraffinwachse sind beispielsweise in den BASF-Handelsprodukten Ramasit^{®} KGT, Persistol^{®} E und Persistol^{®} HP, sowie in Aversin^{®} HY-N von Henkel und Cerol^{®} ZN von Clariant enthalten.

Eine andere Klasse geeigneter Hydrophobierungsmittel sind harzartige Umsetzungsprodukte von einem N-Methylolamin mit einem Fettsäurederivat, z. B. einem Fettsäureamid, -amin oder -alkohol, wie sie z. B. in US-A 2,927,090 oder GB-A 475 170 beschrieben sind. Ihr Schmelzpunkt liegt im Allgemeinen bei 50 bis 90 °C. Derartige Harze sind z. B. in dem BASF-Handelsprodukt Persistol^{®} HP enthalten.

Schließlich sind auch Polyfluoralkyl(meth-)acrylate geeignet, beispielsweise Polyperfluoroctylacrylat. Diese Substanz ist in dem BASF-Handelsprodukt Persistol^{®} O und in Oleophobol^{®} C von Pfersee enthalten.

Als amphiphile Beschichtungsmittel kommen Antistatika, wie Emulgator K30 (Gemisch aus sekundären Natriumalkansulfonaten) oder Glycerinstearate, wie Glycerinmonostearat GMS oder Glycerintristearat, in Betracht.

Die Beschichtung wird auf die EPS-Partikel aufgebracht, die beispielsweise nach den beschriebenen Verfahren V1, V2 und V3 zugänglich sind. Die Beschichtung kann direkt nach der Herstellung des EPS-Partikels ohne vorherige Trocknung, nach Aufarbeitung und Trocknung, auf kompakte EPS-Partikel oder auf vorgeschäumte EPS-Partikel erfolgen. Bevorzugt erfolgt die Beschichtung nach Aufarbeitung und Trocknung kompakter EPS-Partikel oder vorgeschäumter EPS-Partikel.

Das Aufbringen von (A) Insektizid, (B) Glycerinester, gewünschtenfalls (C) Binder und (D) weiteren Additiven kann in beliebiger Reihenfolge nacheinander oder simultan erfolgen.

Dabei können die Beschichtungskomponenten gelöst und/oder dispergiert (z.B. suspendiert oder emulgiert) vorliegen. Je nach Art und Menge der Komponenten kann dies durch einfaches Rühren erfolgen. Bei schlecht mischbaren (schlecht dispergierbaren) Komponenten können erhöhte Temperaturen und/oder Drucke sowie gegebenenfalls spezielle Mischvorrichtungen erforderlich sein, um eine gleichmäßige Vermischung zu erzielen. Erforderlichenfalls kann man Hilfsstoffe mit verwenden, welche das Vermischen erleichtern, beispielsweise übliche Netzmittel. Außerdem kann man die erhaltene Beschichtungszusammensetzung durch Zufügen geeigneter Additive, z.B. gebräuchlicher Schutzkolloide oder Antiabsetzmittel, gegen eine Entmischung stabilisieren.

In einer bevorzugten Ausführungsform werden Binder, Glycerinester und ein oder mehrere Insektizid/e vor der Beschichtung miteinander vermischt und anschließend auf die zu beschichtenden EPS-Partikel aufgetragen.

In einer weiteren besonderen Ausführungsform werden zunächst nacheinander oder gleichzeitig ein oder mehrere Insektizid/e und der Binder auf die EPS-Partikel aufgetragen. Anschließend erfolgt die Beschichtung mit dem Glycerinester.

In einer weiteren besonderen Ausführungsform wird nach der Beschichtung mit dem Insektizid (in formulierter Form oder in reiner Form) und dem Glycerinester der Binder auf die zu beschichtenden EPS-Partikel aufgebracht.

Es ist auch möglich, die Beschichtungskomponenten durch Besprühen oder durch Auftrommeln in üblichen Mischern auf das zu beschichtende EPS aufzubringen. Ebenfalls möglich ist das Eintauchen oder Benetzen der zu beschichtenden EPS-Partikel in einer geeigneten Lösung, Dispersion, Emulsion oder Suspension.

Dazu werden übliche Mischer, Sprühvorrichtungen oder Trommelapparaturen verwendet.

In einer besonderen Ausführungsform wird das EPS-Granulat durch Extrusion einer Treibmittel-haltigen Polystyrolschmelze durch eine Düsenplatte mit anschließender Unterwassergranulation hergestellt, wobei die Beschichtung des EPS-Granulats durch in Wasser gelöste, emulgierte oder suspendierte Beschichtungsmittel im Wasserkreislauf des Unterwassergranulators erfolgt.

Nach oder während der Beschichtung mit einem flüssigen (oder Lösungsmittel enthaltenden) Beschichtungsmittel können die EPS Partikel noch mit Luft bei Raumtemperatur oder leicht erhöhter Temperatur getrocknet werden. Die Temperatur wird vorzugsweise so gewählt, dass ein unbeabsichtigtes Erweichen der EPS-Partikel und ein Entweichen des Treibmittels verhindert werden.

Bei der Beschichtung von nicht vorgeschäumten EPS-Partikeln weisen die beschichteten EPS-Partikel im Allgemeinen eine mittlere Partikelgröße von 0,1 bis 3,0 mm, insbesondere von 0,3 bis 2,0 mm auf.

Die Beschichtung kann außerdem in Form eines Masterbatches erfolgen. Dazu werden nicht vorgeschäumte oder vorgeschäumte EPS-Partikel mit einer deutlich höheren Konzentration an Insektizid beschichtet.

Anschließend kann dieser Masterbatch in einem geeignetem Mischungsverhältnis, bevorzugt von 1:1000 bis 1000:1 mit weiteren EPS-Partikeln gemischt und anschließend in beschriebener Weise verschäumt werden.

Des Weiteren ist es möglich, Masterbatches von EPS-Partikel (nicht vorgeschäumte EPS-Partikel oder vorgeschäumte EPS-Partikel) herzustellen, wobei jeder Masterbatch mit einem oder mehreren unterschiedlichen Insektiziden beschichtet ist. Diese mit unterschiedlichen Insektiziden beschichteten EPS-Partikel können untereinander vermischt werden und zur Herstellung von Schaumkörpern mit mindestens zwei verschiedenen Insektiziden genutzt werden.

Ferner ist Gegenstand der Erfindung ein Verfahren zur Herstellung von Formteilen, erhältlich aus den erfindungsgemäß beschichteten EPS-Partikeln.

Zur Herstellung von Formteilen aus den erfindungsgemäßen EPS-Partikeln können diese in reiner Form oder im Gemisch mit weiteren EPS-Partikeln, insbesondere insektizidfreien EPS-Partikeln, eingesetzt werden.

Das Mischungsverhältnis von erfindungsgemäßen und weiteren EPS-Partikeln ist dabei frei variierbar, wird aber vorzugsweise so gewählt, dass die hergestellten Formteile Konzentrationen von 10 bis 1000 ppm, besonders bevorzugt von 20 bis 1000 ppm und ganz besonders bevorzugt von 50 bis 500 ppm aufweisen.

Bevorzugt sind Mischungsverhältnisse von erfindungsgemäßen EPS-Partikeln zu weiteren EPS-Partikeln von 1000:1 - 1:1000, besonders bevorzugt 100:1 - 1:100, ganz besonders bevorzugt von 50:1 -1:50, und insbesondere 10:1 -1:20.

Bevorzugt ist es, als Formteil zunächst Blöcke herzustellen und die Blöcke anschließend in Schaumstoffplatten zu zerteilen, beispielsweise durch Schneiden oder Sägen.

Die Dicke der Schaumstoffplatten kann in weiten Grenzen variieren und beträgt üblicherweise 1 bis 500, bevorzugt 10 bis 300 mm. Die Länge und Breite der Platten ist ebenfalls in weiten Grenzen variabel. Sie wird u.a. durch die Größe des Werkzeugs (Press- oder Schäumform) und beim Verpressen (siehe unten) durch die Schließkraft der verwendeten Presse begrenzt.

Weiterhin bevorzugt handelt es sich bei den Formteilen um Halbzeuge (Platten, Rohre, Stäbe, Profile, etc.) oder sonstige Formteile mit einfacher oder komplexer Gestalt.

Ferner Gegenstand der Erfindung ist ein Verfahren zur Herstellung erfindungsgemäßer Formteile mit homogener Insektizidverteilung. Dazu werden die EPS-Partikel nach bekannten dem Fachmann geläufigen Methoden in einem ersten Schritt a) vorzugsweise mittels Heißluft oder Wasserdampf partiell vorgeschäumt, und in einem zweiten Schritt b) zu den erfindungsgemäßen Formteilen verschweißt. Das Verschweißen kann durch Ausschäumen (Ausschäumverfahren) oder durch Verpressen (Verpressverfahren) herbeigeführt werden.

Beim Ausschäumverfahren, das bevorzugt ist, werden in Schritt i) die erfindungsgemäßen vorgeschäumten EPS-Partikel in eine gasdichte Form gefüllt. Der Bergriff gasdicht soll nicht ausschließen, dass geringe Mengen, beispielsweise bis zu 10 Vol.-% des in der Form vorhandenen oder beim Ausschäumen entstehenden Gasvolumens, aus der Form austreten können.

Die Geometrie (Raumform) der gasdichten Form entspricht üblicherweise der gewünschten Geometrie des späteren Formteils. Für Schaumstoffplatten ist beispielsweise eine einfache kastenförmige Form geeignet. Die erhaltenen Blöcke können anschließend zu Platten zersägt werden. Bei komplizierteren Geometrien kann es erforderlich sein, die Schüttung der in die Form eingefüllten Partikel zu verdichten wie beim Verpressverfahren (siehe unten) beschrieben.

Da die Partikel beim anschließenden Ausschäumen miteinander verschweißen sollen, ist es vorteilhaft, die Form randvoll mit den Partikeln zu füllen, um das Leervolumen in der Form gering zu halten.

In Schritt ii) werden die eingefüllten Partikel in der geschlossenen Form durch Temperieren (beispielsweise mit Wasserdampf oder einem anderen Wärmeüberträger) auf 60 bis 120, bevorzugt 70 bis 110°C ausgeschäumt. Dabei verschweißen die Partikel zu dem Formteil, indem die Zwischenräume in der Partikelschüttung durch die expandierenden Partikel ausgefüllt werden und die erweichten Partikel miteinander "verschmelzen".

Der Druck beim Ausschäumen ist üblicherweise nicht kritisch und beträgt in der Regel 0,05 bis 2 bar. Die Dauer des Ausschäumens hängt u.a. von Größe und Geometrie sowie der gewünschten Dichte des Formteils ab und kann in weiten Grenzen variieren.

In Schritt iii) des Ausschäumverfahrens entnimmt man das erhaltene Formteil aus der Form, was manuell oder automatisiert mittels üblicher Auswurf- bzw. Entformungsvorrichtungen erfolgen kann.

Demnach umfasst das erfindungsgemäße Verfahren zur Herstellung der Formteile, wobei das Verschweißen b) durch Ausschäumen vorgenommen wird die Schritte:
i) Einfüllen der erfindungsgemäßen vorgeschäumten EPS-Partikel in eine gasdichte Form,
ii) Verschweißen der eingefüllten Partikel in der geschlossenen Form durch Temperieren auf 60 bis 120°C, wobei die Partikel zu durch Aufschäumen zu einem Formteil verschweißen, und
iii) Entnahme des erhaltenen Formteils.

Die mit diesem Ausschäumverfahren erhaltenen Formteile weisen üblicherweise eine Dichte von 10 bis 100, bevorzugt 15 bis 80 und besonders bevorzugt 15 bis 60 g/l auf, bestimmt gemäß DIN 53420. Die Formteile weisen bevorzugt keinen ausgeprägten Dichtegradienten auf, d.h. die Randschichten haben keine deutlich höhere Dichte als die inneren Bereiche des Formteils.

Beim Verpressverfahren werden in Schritt I) die erfindungsgemäßen vorgeschäumten EPS-Partikel in eine gasdurchlässige Form gefüllt. Die Gasdurchlässigkeit kann beispielsweise durch Bohrungen erzielt werden, mit denen die Form versehen ist und die bevorzugt derart beschaffen sind, dass sie beim anschließenden Verpressen (Schritt II), (siehe unten) nicht vom Polymer verstopft werden, beispielsweise indem sie einen geringen Durchmesser aufweisen.

Die Geometrie (Raumform) der gasdurchlässigen Form entspricht in der Regel der gewünschten Geometrie des späteren Formteils. Sollen Schaumstoffplatten hergestellt werden, kann man eine einfache kastenförmige Form verwenden. Insbesondere bei komplizierten Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Da die Partikel anschließend verpresst werden, ist es - anders als beim weiter unten beschriebenen Ausschäumverfahren - nicht bevorzugt, aber auch nicht nachteilig, die Form randvoll mit den Partikeln zu füllen. Der Füllgrad richtet sich u.a. nach der gewünschten Dicke des späteren Formteils.

In Schritt II) werden die eingefüllten Partikel unter Volumenreduktion zu einem Pressling verpresst. Die Volumenreduktion beträgt in der Regel 1 bis 80, bevorzugt 5 bis 60 und insbesondere 10 bis 50 Vol.-%, bezogen auf das Volumen der eingefüllten Partikel vor dem Verpressen.

Die Temperatur beim Verpressen beträgt üblicherweise 20 bis 100, bevorzugt 30 bis 90 und insbesondere 40 bis 80°C. Das Temperieren kann z.B. durch elektrische Beheizung oder Wärmeüberträgermedien erfolgen. Das Druckmaximum beim Pressvorgang bzw. die Schließkraft der Presse sowie die Dauer des Verpressens (Presszeit) hängen u.a. von Größe und Geometrie sowie der gewünschten Dichte des Formteils ab und können in weiten Grenzen variieren.

Die Gasdurchlässigkeit der Form gewährleistet, dass in und zwischen den Partikeln vorhandenes Treibmittel, Luft oder andere Gase beim Verpressen gleichmäßig entweichen können. Sofern die beschichteten Partikel nicht getrocknet, sondern mit "feuchter" Beschichtung eingesetzt wurden, entweichen auch die flüchtigen Hilfsstoffe, z.B. das in der Beschichtungszusammensetzung enthaltene Wasser.

Zum Verpressen eignen sich übliche Pressen mit Pressform und Stempel, beispielsweise Etagenpressen. Dabei können die Form oder der Stempel oder beide Bauteile temperiert sein.

In Schritt III) des Verpressverfahrens entnimmt man das erhaltene Formteil aus der Form. Dies kann manuell oder automatisiert mittels üblicher Auswurf- bzw. Entformungsvorrichtungen erfolgen.
Demnach umfasst das erfindungsgemäße Verfahren zur Herstellung eines Formteils, wobei das Verschweißen b) durch Verpressen vorgenommen wird, die Schritte:
I) Einfüllen der erfindungsgemäßen vorgeschäumten EPS-Partikel in eine gasdurchlässige Form,
II) Verpressen der eingefüllten Partikel in der geschlossenen Form unter Volumenreduktion zu einem Pressling,
III) Entnahme des erhaltenen Formteils.

Die Dichte der mit diesem Verpressverfahren erhaltenen Formteile beträgt in der Regel 8 bis 120, bevorzugt 20 bis 100 und besonders bevorzugt 20 bis 70 g/l gemäß DIN 53420. Die Formteile weisen bevorzugt keinen ausgeprägten Dichtegradienten auf, d.h. die Randschichten haben keine deutlich höhere Dichte als die inneren Bereiche des Formteils.

Typische Abmessungen der mit dem Verpress- oder Ausschäumverfahren erhältlichen Schaumstoffplatten wurden bereits genannt.

Weitere Angaben zu üblichen Polymerisations-, Imprägnier- und Schäumverfahren finden sich beispielsweise im Kunststoffhandbuch , Band 5, Polystyrol, herausgegeben von R. Vieweg und G. Daumiller, Carl Hanser Verlag München 1969.

Ein weiterer Gegenstand der Erfindung ist die Verwendung der erfindungsgemäßen Formteile in der Bauindustrie, zum Beispiel als Isolationsmaterial unter- und oberirdisch zur Vermeidung oder Verminderung der Schädigung dieser Formteile durch Schädlinge wie zum Beispiel Insekten, die durch Fraß eine substanzielle Schädigung der Formteile herbeiführen können, sodass die Isolationswirkung sowie die mechanische Stabilität der Formteile eingeschränkt werden und ein weiteres Vordringen der Schädlinge ermöglicht wird.

Die erfindungsgemäßen Formteile können mit Vorteil in solchen Formteilen eingesetzt werden, die ständiger Wassereinwirkung ausgesetzt sind, z. B. für Platten für die Dachisolierung oder Perimeterdämmung, für Schwimmkörper oder wasserem-pfindliche Verpackungsmaterialien, wie Fischkisten.

Die erfindungsgemäßen Formteile sind besonders zur Vermeidung oder Verminderung der Schädigung durch Termiten geeignet. Gegenstand der Erfindung ist daher auch die Verwendung erfindungsgemäßer Formteile zum Schutz vor Termiten, sowie ein Verfahren zum Schutz von Gebäuden vor Termiten, wobei die erfindungsgemäßen Formteile in das Fundament, die Außenwände oder das Dach der zu schützenden Gebäude eingebaut werden.

Die Erfindung wird durch die Beispiele näher erläutert, ohne sie darauf zu beschränken

### Beispiele

### 1. Ausgangsstoffe

### a) EPS

Als EPS wurde F 295 Rohprodukt eingesetzt.

### b) Insektizidkomponente

Als Insektizidkomponente (A) wurde eine wässrige Fipronilformulierung durch Vermahlen und Vermischen von 500 g Fipronil, 25 g eines ethoxilierten Phosphatestersalzes, 10 g eines Tridecylalkoholethoxylats (mit einem HLB von 12), 10 g eines Farbstoffes (Rubin Toner 2BO), 2,5 g eines Verdickers (Xantham Gummi) und Auffüllen mit Wasser auf ein Volumen von 1 I hergestellt.

### c) Binder

- B1 Acronal^{®} S728: = wässrige Styrol/Acrylat-Dispersion (BASF SE),
- B2 Acronal^{®} LR 8977: = wässrige selbstvernetzende Copolymerdispersion (Butacrylat/Styrol) (BASF SE),
- B3 Acronal^{®} S 760: = wässrige selbstvernetzende Copolymerdispersion (Butacrylat/Styrol) (BASF SE),
- B4 Styronal^{®} D 628: = wässrige Copolymerdispersion (Styrol/Acrylnitril/Butadien) (BASF SE),
- B5 Acronal^{®} S 504: = wässrige Dispersion eines Acrylsäureester-Copolymerisats unter Mitverwendung von Acrylnitril (BASF SE),
- B6 Styronal^{®} D 537: = wässrige Copolymerdispersion (Styrol/Butadien) (BASF SE).

### d) Glycerinester

Als Glycerinester (C) wurde Glycerinstearat eingesetzt.

### 2. Herstellung der erfindungsgemäßen EPS-Partikel

200 g EPS Granulat wurden in einem Sumakonmischer bei 200 rpm (Abstreifer 40 rpm) 30 Sekunden lang bei Raumtemperatur mit einer Mischung der Fipronilformulierung (A), einem Binder (B) und Glycerinester (C) vermischt sowie jeweils 0,04 Gew.-% Silikat (FK320 von Degussa)

### 3. Anwendungstechnische Versuche

Die Tabellen 1 und 1a geben die Zusammensetzung der hergestellten erfindungsgemäßen EPS-Partikel an:

**Tabelle 1**

| Beispiel | EPS [g] | Fipronil-Formulierung (A) [g] | B1 [g] | B2 [g] | B3 [g] | B4 [9] | B5 [g] | B6 [g] | Glycerinester (C) [g] |
|---|---|---|---|---|---|---|---|---|---|
| 1 | 198,5 | 0,27 | 0,25 | - | - | - | - | - | 0,4 |
| 2 | 198,5 | 0,55 | 0,25 | - | - | - | - | - | 0,4 |
| 3 | 198,5 | 0,11 | 0,25 | - | - | - | - | - | 0,4 |
| 4 | 198,5 | 0,21 | 0,24 | - | - | - | - | - | 0,4 |
| 5 | 198,5 | 0,27 | 0,5 | - | - | - | - | - | 0,4 |
| 6 | 198,5 | 0,55 | 0,5 | - | - | - | - | - | 0,4 |
| 7 | 198,5 | 0,11 | 0,5 | - | - | - | - | - | 0,4 |
| 8 | 198,5 | 0,21 | 0,5 | - | - | - | - | - | 0,4 |
| 9 | 198,5 | 0,27 | 0,75 | - | - | - | - | - | 0,4 |
| 10 | 198,5 | 0,55 | 0,75 | - | - | - | - | - | 0,4 |
| 11 | 198,5 | 0,11 | 0,75 | - | - | - | - | - | 0,4 |
| 12 | 198,5 | 0,21 | 0,75 | - | - | - | - | - | 0,4 |
| 13 | 198,5 | 0,27 | - | 0,25 | - | - | - | - | 0,4 |
| 14 | 198,5 | 0,55 | - | 0,25 | - | - | - | - | 0,4 |
| 15 | 198,5 | 0,11 | - | 0,25 | - | - | - | - | 0,4 |
| 16 | 198,5 | 0,21 | - | 0,24 | - | - | - | - | 0,4 |
| 17 | 198,5 | 0,27 | - | 0,5 | - | - | - | - | 0,4 |
| 18 | 198,5 | 0,55 | - | 0,5 | - | - | - | - | 0,4 |
| 19 | 198,5 | 0,11 | - | 0,5 | - | - | - | - | 0,4 |
| 20 | 198,5 | 0,21 | - | 0.5 | - | - | - | - | 0,4 |
| 21 | 198,5 | 0,27 | - | 0,75 | - | - | - | - | 0,4 |
| 22 | 198,5 | 0,55 | - | 0,75 | - | - | - | - | 0,4 |
| 23 | 198,5 | 0,11 | - | 0,75 | - | - | - | - | 0,4 |
| 24 | 198,5 | 0,21 | - | 0,75 | - | - | - | - | 0,4 |
| 25 | 198,5 | 0,27 | - | - | 0,25 | - | - | - | 0,4 |
| 26 | 198,5 | 0,55 | - | - | 0,25 | - | - | - | 0,4 |
| 27 | 198,5 | 0,11 | - | - | 0,25 | - | - | - | 0,4 |
| 28 | 198,5 | 0,21 | - | - | 0,24 | - | - | - | 0,4 |
| 29 | 198,5 | 0,27 | - | - | 0,5 | - | - | - | 0,4 |
| 30 | 198,5 | 0,55 | - | - | 0,5 | - | - | - | 0,4 |
| 31 | 198,5 | 0,11 | - | - | 0,5 | - | - | - | 0,4 |
| 32 | 198,5 | 0,21 | - | - | 0,5 | - | - | - | 0,4 |
| 33 | 198,5 | 0,27 | - | - | 0,75 | - | - | - | 0,4 |
| 34 | 198,5 | 0,55 | - | - | 0,75 | - | - | - | 0,4 |
| 35 | 198,5 | 0,11 | - | - | 0,75 | - | - | - | 0,4 |
| 36 | 198,5 | 0,21 | - | - | 0,75 | - | - | - | 0,4 |
| 37 | 198,5 | 0,27 | - | - | - | 0,25 | - | - | 0,4 |
| 38 | 198,5 | 0,55 | - | - | - | 0,25 | - | - | 0,4 |
| 39 | 198,5 | 0,11 | - | - | - | 0,25 | - | - | 0,4 |
| 40 | 198,5 | 0,21 | - | - | - | 0,24 | - | - | 0,4 |
| 41 | 198,5 | 0,27 | - | - | - | 0,5 | - | - | 0,4 |
| 42 | 198,5 | 0,55 | - | - | - | 0,5 | - | - | 0,4 |
| 43 | 198,5 | 0,11 | - | - | - | 0,5 | - | - | 0,4 |
| 44 | 198,5 | 0,21 | - | - | - | 0,5 | - | - | 0,4 |
| 45 | 198,5 | 0,27 | - | - | - | 0,75 | - | - | 0,4 |
| 46 | 198,5 | 0,55 | - | - | - | 0,75 | - | - | 0,4 |
| 47 | 198,5 | 0,11 | - | - | - | 0,75 | - | - | 0,4 |
| 48 | 198,5 | 0,21 | - | - | - | 0,75 | - | - | 0,4 |
| 49 | 198,5 | 0,27 | - | - | - | - | 0,25 | - | 0,4 |
| 50 | 198,5 | 0,55 | - | - | - | - | 0,25 | - | 0,4 |
| 51 | 198,5 | 0,11 | - | - | - | - | 0,25 | - | 0,4 |
| 52 | 198,5 | 0,21 | - | - | - | - | 0,24 | - | 0,4 |
| 53 | 198,5 | 0,27 | - | - | - | - | 0,5 | - | 0,4 |
| 54 | 198,5 | 0,55 | - | - | - | - | 0,5 | - | 0,4 |
| 55 | 198,5 | 0,11 | - | - | - | - | 0,5 | - | 0,4 |
| 56 | 198,5 | 0,21 | - | - | - | - | 0,5 | - | 0,4 |
| 57 | 198,5 | 0,27 | - | - | - | - | 0,75 | - | 0,4 |
| 58 | 198,5 | 0,55 | - | - | - | - | 0,75 | - | 0,4 |
| 59 | 198,5 | 0,11 | - | - | - | - | 0,75 | - | 0,4 |
| 60 | 198,5 | 0,21 | - | - | - | - | 0,75 | - | 0,4 |
| 61 | 198,5 | 0,27 | - | - | - | - | - | 0,25 | 0,4 |
| 62 | 198,5 | 0,55 | - | - | - | - | - | 0,25 | 0,4 |
| 63 | 198,5 | 0,11 | - | - | - | - | - | 0,25 | 0,4 |
| 64 | 198,5 | 0,21 | - | - | - | - | - | 0,24 | 0,4 |
| 65 | 198,5 | 0,27 | - | - | - | - | - | 0,5 | 0,4 |
| 66 | 198,5 | 0,55 | - | - | - | - | - | 0,5 | 0,4 |
| 67 | 198,5 | 0,11 | - | - | - | - | - | 0,5 | 0,4 |
| 68 | 198,5 | 0,21 | - | - | - | - | - | 0,5 | 0,4 |
| 69 | 198,5 | 0,27 | - | - | - | - | - | 0,75 | 0,4 |
| 70 | 198,5 | 0,55 | - | - | - | - | - | 0,75 | 0,4 |
| 71 | 198,5 | 0,11 | - | - | - | - | - | 0,75 | 0,4 |
| 72 | 198,5 | 0,21 | - | - | - | - | - | 0,75 | 0,4 |

**Tabelle 1a**

| Bespiel | EPS [g] | Fipronil-Formulierung (A) [g] | Wirkstoff | B4 [g] | Glycerinester (C) [g] |
|---|---|---|---|---|---|
| 73 | 250 | 0,275 | Fipronil (Termidor^{®} SC) | | 0,4 |
| 74 | 250 | 0,55 | | | 0,4 |
| 75 | 250 | 1,375 | | | 0,4 |
| 76 | 250 | 0,1 | Deltamethrin (25 % WG Formulierung) | | 0,4 |
| 77 | 250 | 0,5 | | | 0,4 |
| 78 | 250 | 1 | | | 0,4 |
| 79 | 250 | 1,5 | | | 0,4 |
| 80 | 250 | 0,036 | Imidacloprid (70 % WG Formulierung) | | 0,4 |
| 81 | 250 | 0,178 | | | 0,4 |
| 82 | 250 | 0,36 | | | 0,4 |
| 83 | 250 | 0,25 | Natriumborat (technische Substanz) | | 0,4 |
| 84 | 250 | 0,375 | | | 0,4 |
| 85 | 250 | - | - | | 0,4 |

### Homogenität, Rieselfähigkeit und Abrieb

Die hergestellten EPS-Granulate wurden bezüglich Homogenität, Rieselfähigkeit des Granulats und Abrieb begutachtet. Zur Bestimmung des Abriebs wurden 2 g beschichtetes EPS Granulat in einem 10 ml Glaszylinder für 10 Minuten intensiv geschüttelt, das Granulat entfernt und der im Glaszylinder verbleibende Rückstand gewogen.

Die Ergebnisse sind in Tabelle 2 dargestellt.

**Tabelle 2**

| **Beispiel** | **Homogenität** | **Rieselfähigkeit** | **Abrieb** |
|---|---|---|---|
| 1 bis 4 | homogen | sehr gut | kaum (< 0,5 promille) |
| 5 bis 8 | homogen, | sehr gut | kaum (< 0,5 promille) |
| 9 bis 12 | homogen | sehr gut | kaum (< 0,5 promille) |
| 13 bis 16 | homogen | sehr gut | gering (< 1 promille) |
| 17 bis 20 | homogen | gut - sehr gut | gering (< 1 promille) |
| 21 bis 24 | homogen | gut - sehr gut | gering (< 1 promille) |
| 25 bis 28 | homogen | gut - sehr gut | kaum (< 0,5 promille) |
| 29 bis 32 | homogen | gut | kaum (< 0,5 promille) |
| 33 bis 36 | homogen | gut | kaum (< 0,5 promille) |
| 37 bis 40 | homogen | gut - sehr gut | kaum (< 0,5 promille) |
| 41 bis 44 | homogen | gut | kaum (< 0,5 promille) |
| 45 bis 48 | homogen | gut | kaum (< 0,5 promille) |
| 49 bis 52 | inhomogen | gut | gering (< 1 promille) |
| 53 bis 56 | inhomogen | schlecht | gering (< 1 promille) |
| 57 bis 60 | inhomogen | schlecht | gering (< 1 promille) |
| 61 bis 64 | inhomogen | gut | gering (< 2 promille) |
| 65 bis 68 | inhomogen | schlecht | gering (< 2 promille) |
| 69 bis 72 | inhomogen | schlecht | gering (< 2 promille) |

### Wirkstoffgehalt der hergestellten Schaumkörper

Der Wirkstoffgehalt wurde mittels GC/MS bestimmt. Dazu wurden 0,5g EPS in Acetonitril gelöst und ein Aliquot dieser Lösung in verdünnter Form mittels LC/MS/MS (Agilent GC: 6890N mit einem Detektor MS D 5973) quantifiziert.

Die Ergebnisse sind in Tabelle 3 dargestellt.

**Tabelle 3**

| **Beispiel** | **Dichte** | **Wirkstoffgehalt** | |
|---|---|---|---|
| | | **Vor Verschäumen [ppm]** | **Nach Verschäumen [ppm]** |
| 5 | | 48 | 46 |
| 6 | | 103 | 105 |
| 7 | | 205 | 201 |
| 8 | | 526 | 523 |
| 17 | | 53 | 53 |
| 18 | | 102 | 98 |
| 19 | | 203 | 198 |
| 20 | | 511 | 510 |
| 29 | | 48 | 47 |
| 30 | | 98 | 100 |
| 31 | | 202 | 199 |
| 32 | | 486 | 482 |
| 41 | | 51 | 50 |
| 42 | | 102 | 100 |
| 43 | | 218 | 212 |
| 44 | | 497 | 494 |

Die insektizide Wirksamkeit wurde nach folgender Methode ermittelt:

Die biologische Versuchsmethode wurde ähnlich dem biologischen Versuchsverfahren von Su et al. (1993) zur Bestimmung der Wirkung von Bodentermitiziden gewählt. Aus erfindungsgemäßen Schaumblöcken wurden unter Verwendung einer Bohrmaschine mit Zapfenbohrer Zylinder (ungefähr 2,5 cm Durchmesser und 5,0 cm Länge) geschnitten. Jeder Polystyrolzylinder wurde in einem 2,5 cm durchmessendes Tenite^{®}-Polyesterröhrchen verkeilt. Dieses Röhrchen wurde dann über einen Tygon-Verbindungschlauch mit einem anderen Röhrchen verbunden, das 80 Arbeiterinnen und einen Soldaten enthielt. Die 5,0 cm-Polystyrolzylinder wurden zwischen zwei 3 cm-Agarsegmente eingelegt. Späne von Gelbkiefer und Papierstreifen dienten als Futter und Nest für Termiten sowohl in dem Röhrchen mit Termiten wie auch dem Röhrchen mit dem Polystyrolzylinder. Die Röhrchen wurden während der siebentägigen Versuchsdauer bei 25 °C gehalten.

Die durch die äußere Oberfläche des Zylinders entlang der inneren Wand des Röhrchens getunnelte Strecke wurde alle 24 Stunden aufgezeichnet. Kurze (< 10 mm) gerade Tunnel auf der Außenseite des Zylinders wurden mit einem Lineal gemessen. Längere, gekrümmte Tunnel wurden ausgemessen, indem ein Abschnitt eines Gummibandes entlang dem Verlauf des Tunnels gelegt und dann die Länge des Gummibandes gemessen wurde. Der Versuch wurde nach sieben Tagen beendet. Bei Beendigung wurden Mortalität sowie die Länge der durch das Innere des Zylinders getunnelten Strecke bestimmt, indem kleine Stücke von 0,5 mm isoliertem Telefondraht durch die Tunnel gefädelt wurden und nach Herausziehen des Drahtes dessen Länge mit einem Lineal bestimmt wurde. Um das Ausmaß des Tunnelns durch das Innere des Zylinders für einen bestimmten Tag zu ermitteln, wurde das Verhältnis der Gesamtlänge des Tunnels auf der Außenfläche des Zylinders zu der Länge des Tunnelns für den bestimmten Tag berechnet und die ermittelte Gesamtlänge des Tunnels im Inneren des Zylinders durch dieses Verhältnis geteilt.

Die Ergebnisse sind in Tabelle 4 und Tabelle 5 dargestellt.

**Tabelle 4**

| **Beispiel** | **durchschnittliche Mortalität [%]** | **durchschnittl. äußeres Tunneln [cm]** | **durchschnittl. inneres Tunneln [cm]** | **durchschnittl. Gesamttunneln [cm]** |
|---|---|---|---|---|
| 5 | 89,5 | 3,7 | 7,2 | 10,9 |
| 6 | 81,5 | 4,2 | 7,9 | 12,0 |
| 7 | 98,5 | 2,8 | 3,8 | 6,6 |
| 8 | 99,7 | 3,6 | 4,8 | 8,4 |
| 9 | 99,7 | 5,7 | 4,4 | 10,1 |
| 10 | 98,5 | 5,8 | 2,5 | 8,3 |
| 11 | 99,7 | 2,7 | 1,6 | 4,3 |
| 12 | 99,7 | 1,3 | 1,3 | 2,6 |
| 37 | 86,4 | 4,1 | 2,5 | 6,6 |
| 38 | 99,6 | 3,2 | 3,7 | 6,4 |
| 39 | 97,5 | 4,6 | 2,0 | 6,7 |
| 40 | 96,0 | 1,9 | 2,8 | 4,7 |
| 41 | 56,8 | 5,7 | 5,4 | 11,1 |
| 42 | 93,8 | 3,7 | 3,7 | 7,5 |
| 43 | 96,0 | 4,4 | 4,1 | 8,5 |
| 44 | 97,8 | 2,3 | 2,5 | 4,9 |
| | | | | |
| Referenz | 23,1 | 6,5 | 6,8 | 13,3 |

**Tabelle 5**

| **Beispiel** | **durchschnittliche Mortalität [%]** | **durchschnittl. Gesamttunneln [cm]** |
|---|---|---|
| 73 | 89,8 | 1,2 |
| 74 | 99,7 | 2,3 |
| 75 | 99,4 | 0,7 |
| 76 | 66,7 | 0,3 |
| 77 | 98,5 | 2,0 |
| 78 | 90,1 | 0,0 |
| 79 | 92,9 | 0,8 |
| 80 | 76,9 | 0,0 |
| 81 | 99,1 | 0,8 |
| 82 | 87,7 | 0,8 |
| 83 | 29,9 | 6,2 |
| 84 | 16,0 | 1,8 |
| 85 | 10,5 | 3,4 |

## Patentansprüche

1. Partikel aus expandierbarem Polystyrol (EPS), beschichtet mit
(A) einem oder mehreren Insektizid/en
(B) einem oder mehreren Glycerinester/n
(C) gegebenenfalls einem oder mehreren Binder/n und
(D) gegebenenfalls weiteren Additiven.

2. EPS-Partikel nach Anspruch 1, **dadurch gekennzeichnet, dass** das Insektizid ausgewählt ist aus der Gruppe bestehend aus
1.1 Acetoprole, Ethiprole, Fipronil, Vaniliprole;
1.2 Carbaryl;
1.3 Bifenthrin, Cyfluthrin, Cyhalothrin, Cypermethrin, alpha-Cypermethrin, Deltamethrin, Fenvalerate, lambda-Cyhalothrin, Permethrin;
1.4 Diflubenzuron, Flufenoxuron, Hexaflumuron, Noviflumuron, Sulfluramid;
1.5 Acetamiprid, Imidacloprid, Thiacloprid, Thiamethoxam;
1.6 Chlorpyrifos, Fenitrothion, Isofenphos;
1.7 Spinosad;
I.8. Fenazaquin, Pyridaben, Tebufenpyrad, Tolfenpyrad;
I.9. Hydramethylnon;
1.10. Chlorfenapyr;
1.11. Cyhexatin, Diafenthiuron, Fenbutatin Oxid, Propargite;
I.12. Cyromazine;
I.13. Piperonyl Butoxide;
I.14. Indoxacarb, Metaflumizone;
I.15. Borate, Chlorantraniliprol und Flonicamid.

3. EPS-Partikel nach Anspruch 2, **dadurch gekennzeichnet, dass** das/die Insektizid/e ausgewählt ist/sind aus der Gruppe bestehend aus Fipronil, Hydramethylnon und Chlorfenapyr.

4. EPS-Partikel nach einem der Ansprüche 1 bis 3, **dadurch gekennzeichnet, dass** der/die Binder ein/e Polymerdispersion/en mit einer Filmbildungstemperatur (MFT) von -5 bis +35°C ist/sind.

5. EPS-Partikel nach einem der Ansprüche 1 bis 4, **dadurch gekennzeichnet, dass** der/die Binder ein/e Acrylatdispersion/en ist/sind.

6. EPS-Partikel nach einem der Ansprüche 1 bis 5, **dadurch gekennzeichnet, dass** als Glycerinester eine oder mehrere Verbindungen der Formel (X) eingesetzt werden, 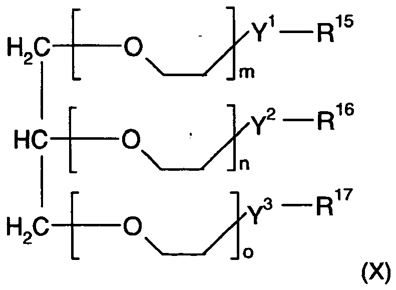 worin die Symbole und Indizes folgende Bedeutungen haben:
m, n, o sind unabhängig voneinander ganze Zahlen von 0 bis 10;
Y¹, Y² und Y³ bedeuten unabhängig voneinander -O-, -S- oder -NR¹⁸-;
R¹⁸ ist Wasserstoff, C₁-C₁₀-Alkyl;
R¹⁵, R¹⁶ und R¹⁷ sind unabhängig voneinander Wasserstoff, -SO R¹⁹, -SO₂ R¹⁹, - SO₃ R¹⁹ oder -COR¹⁹;
R¹⁹ ist Wasserstoff, C₁-C₃₀-Alkyl, wobei der Alkylrest geradkettig oder verzweigt ist, gesättigt ist oder ein oder mehrere C-C-Doppel- oder C-C-Dreifachbindungen enthält und unsubstituiert oder mit einem oder mehreren Resten aus der Gruppe Hydroxyl, Oxo und COOR²⁰ (wobei R²⁰ C₁-C₆-Alkyl bedeutet) substituiert ist.

7. Formteil erhältlich aus EPS-Partikeln gemäß einem der Ansprüche 1 bis 6.

8. Formteil nach Anspruch 7, **dadurch gekennzeichnet, dass** ein oder mehrere Binder in der Summe in Konzentrationen von 0,005 bis 4,0 Gew.-%, bezogen auf das Gewicht des Formteils, vorliegen und dass ein Insektizid in der Summe in Konzentrationen von 10 bis 1000 ppm, bezogen auf das Gewicht des Formteils, vorliegt.

9. Verfahren zur Herstellung eines Formteils nach Anspruch 7 oder 8 durch Verpressen, wobei man
I) EPS-Partikel nach einem der Ansprüche 1 bis 6 in eine gasdurchlässige Form einfüllt,
II) die eingefüllten Partikel in der geschlossenen Form unter Volumenreduktion zu einem Pressling verpresst,
III) den Pressling durch Temperieren auf 20 bis 100°C aushärtet, und
IV) das erhaltene Formteil aus der Form entnimmt.

10. Verfahren zur Herstellung der Formteile nach Anspruch 7 oder 8 durch Ausschäumen, wobei man
i) EPS-Partikel gemäß einem der Ansprüche 1 bis 6 in eine gasdichte Form einfüllt,
ii) die eingefüllten Partikel in der geschlossenen Form durch Temperieren auf 60 bis 120°C ausschäumt, wobei die Partikel zu dem Formteil verschweißen, und
iii) das erhaltene Formteil aus der Form entnimmt.

11. Verwendung von Formteilen nach Anspruch 7 oder 8 als Isolationsmaterial in der Bauindustrie.

12. Verwendung eines Formteils nach einem der Ansprüche 7 oder 8 zum Schutz von Gebäuden gegen Termiten.

13. Verfahren zum Schutz eines Gebäudes gegen Termiten, wobei Formteile gemäß Anspruch 7 oder 8 in das Fundament, die Außenwände oder das Dach des zu schützenden Gebäudes eingebaut werden.

## Claims

1. A bead material composed of expandable polystyrene (EPS), coated with
(A) one or more insecticides
(B) one or more glycerol esters
(C) optionally one or more binders, and
(D) optionally further additives.

2. The EPS bead material according to claim 1, wherein the insecticide has been selected from the group consisting of
1.1 Acetoprole, ethiprole, fipronil, vaniliprole;
1.2 Carbaryl;
1.3 Bifenthrin, cyfluthrin, cyhalothrin, cypermethrin, alpha-cypermethrin, deltamethrin, fenvalerate, lambda-cyhalothrin, permethrin;
1.4 Diflubenzuron, flufenoxuron, hexaflumuron, noviflumuron, sulfluramid;
1.5 Acetamiprid, imidacloprid, thiacloprid, thiamethoxam;
1.6 Chlorpyrifos, fenitrothion, isofenphos;
1.7 Spinosad;
I.8. Fenazaquin, pyridaben, tebufenpyrad, tolfenpyrad;
I.9. Hydramethylnon;
1.10. Chlorfenapyr;
1.11. Cyhexatin, diafenthiuron, fenbutatin oxide, propargite;
I.12. Cyromazine;
I.13. Piperonyl butoxide;
I.14. Indoxacarb, metaflumizone;
I.15. Borates, chlorantraniliprol and flonicamid.

3. The EPS bead material according to claim 2, wherein the insecticide(s) has/have been selected from the group consisting of fipronil, hydramethylnon and chlorfenapyr.

4. The EPS bead material according to any of claims 1 to 3, wherein the binder(s) is/are a polymer dispersion(s) whose film-forming temperature (MFT) is from -5 to +35°C.

5. The EPS bead material according to any of claims 1 to 4, wherein the binder(s) is/are an acrylate dispersion(s).

6. The EPS bead material according to any of claims 1 to 5, wherein one or more compounds of the formula (X) is/are used as glycerol ester 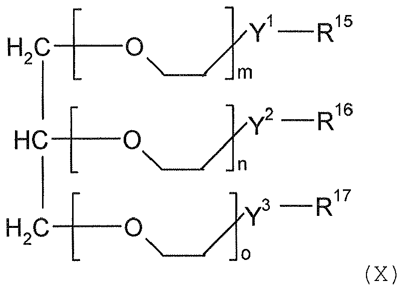 in which the definitions of the symbols and indices are as follows:
m, n, and o, independently of one another, are whole numbers from 0 to 10;
Y¹, Y², and Y³, independently of one another, are - O-, -S-, or -NR¹⁸ -;
R¹⁸ is hydrogen or C₁-C₁₀-alkyl;
R¹⁵, R¹⁶, and R¹⁷, independently of one another, are hydrogen, -SO R¹⁹, -SO₂ R¹⁹, -SO₃ R¹⁹ or -COR¹⁹;
R¹⁹ is hyrogen, C₁-C₃₀-alkyl, where the alkyl radical is straight-chain or branched, saturated, or comprises one or more C-C double or C-C triple bonds and is unsubstituted or substituted with one or more radicals from the group of hydroxy, oxo, and COOR²⁰ (where R²⁰ is C₁-C₆-alkyl) .

7. A molding obtainable from EPS bead material according to any of claims 1 to 6.

8. A molding according to claim 7, wherein one or more binders is present at total concentrations of from 0.005 to 4.0% by weight, based on the weight of the molding, and wherein an insectide is present at total concentrations of from 10 to 1000 ppm, based on the weight of the molding.

9. A process for the production of a molding according to claim 7 or 8 by press molding,
where
I) an EPS bead material according to any of claims 1 to 6 is charged to a gas-permeable mold,
II) within the closed mold, the charge of bead material is press-molded to give a molding, with volume reduction,
III) the molding is hardened by controlling its temperature to from 20 to 100°C, and
IV) the resultant molding is removed from the mold.

10. A process for the production of the moldings according to claim 7 or 8 by foaming-to-completion, where
i) an EPS bead material according to any of claims 1 to 6 is charged to a gastight mold,
ii) within the closed mold, the charge of bead material is foamed to completion by controlling its temperature to from 60 to 120°C, whereupon the bead material fuses to give the molding, and
iii) the resultant molding is removed from the mold.

11. The use of moldings according to claim 7 or 8 as insulation material in the construction industry.

12. The use of a molding according to either of claims 7 and 8 for the protection of buildings against termites.

13. A method of protecting a building against termites by incorporating moldings according to claim 7 or 8 into the foundations, the outer walls or the roof of the building to be protected.

## Revendications

1. Particules en polystyrène expansible (EPS), revêtues de
(A) un ou plusieurs insecticide(s)
(B) un ou plusieurs ester(s) de glycérol
(C) le cas échéant un ou plusieurs liant(s) et
(D) le cas échéant d'autres additifs.

2. Particules en EPS selon la revendication 1, **caractérisées en ce que** l'insecticide est choisi dans le groupe constitué par :
1.1 Acétoprole, Ethiprole, Fipronil, Vaniliprole ;
1.2 Carbaryl ;
1.3 Bifenthrine, Cyfluthrine, Cyhalothrine, Cyperméthrine, alpha-Cyperméthrine, Deltaméthrine, Fenvalérate, lambda-Cyhalothrine, Perméthrine ;
1.4 Diflubenzuron, Flufenoxuron, Hexaflumuron, Noviflumuron, Sulfluramide ;
1.5 Acétamipride, Imidaclopride, Thiaclopride, Thiaméthoxam ;
1.6 Chlorpyrifos, Fenitrothion, Isofenphos ;
1.7 Spinosad ;
I.8. Fenazaquin, Pyridaben, Tebufenpyrad, Tolfenpyrad ;
I.9. Hydraméthylnon ;
1.10. Chlorfenapyr ;
1.11. Cyhexatin, Diafenthiuron, Fenbutatin Oxyde, Propargite ;
I.12. Cyromazine ;
I.13. Pipéronyle Butoxyde ;
I.14. Indoxacarb, Métaflumizone ;
I.15. Borate, Chlorantraniliprol et Flonicamide.

3. Particules en EPS selon la revendication 2, **caractérisées en ce que** le (s) insecticide (s) est/sont choisi(s) dans le groupe constitué par le Fipronil, l'Hydraméthylnon et le Chlorfenapyr.

4. Particules en EPS selon l'une quelconque des revendications 1 à 3, **caractérisées en ce que** le(s) liant(s) est/sont une/des dispersion(s) de polymère présentant une température de formation de film (MFT) de -5 à +35°C.

5. Particules en EPS selon l'une quelconque des revendications 1 à 4, **caractérisées en ce que** le (s) liant(s) est/sont une/des dispersion(s) d'acrylate.

6. Particules en EPS selon l'une quelconque des revendications 1 à 5, **caractérisées en ce qu'**on utilise comme ester(s) de glycérol un ou plusieurs composés de formule (X), 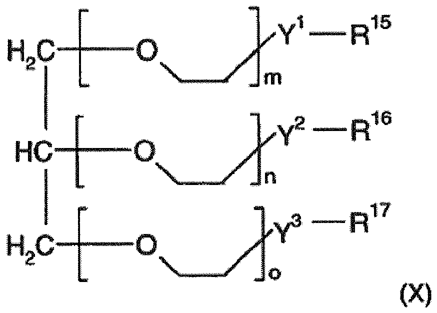 où les symboles et les indices présentent les significations suivantes :
m, n, o valent, indépendamment l'un de l'autre, des nombres entiers de 0 à 10 ;
Y¹, Y² et Y³ signifient, indépendamment l'un de l'autre, -O-, -S- ou -NR¹⁸- ;
R¹⁸ représente hydrogène, C₁-C₁₀-alkyle ;
R¹⁵, R¹⁶ et R¹⁷ représentent, indépendamment l'un de l'autre, hydrogène, -SOR¹⁹, -SO₂R¹⁹, -SO₃R¹⁹ ou -COR¹⁹ ;
R¹⁹ représente hydrogène, C₁-C₃₀-alkyle, où le radical alkyle est linéaire ou ramifié, saturé ou contient une ou plusieurs doubles ou triples liaisons C-C et est non substitué ou substitué par un ou plusieurs radicaux du groupe formé par hydroxyle, oxo et COOR²⁰ (où R²⁰ signifie C₁-C₆-alkyle) .

7. Pièce façonnée, pouvant être obtenue à partir de particules en EPS selon l'une quelconque des revendications 1 à 6.

8. Pièce façonnée selon la revendication 7, **caractérisée en ce qu'**un ou plusieurs liants se trouvent au total en des concentrations de 0,005 à 4,0% en poids, par rapport au poids de la pièce façonnée et **en ce qu'**un insecticide se trouve au total en des concentrations de 10 à 1000 ppm, par rapport au poids de la pièce façonnée.

9. Procédé pour la fabrication d'une pièce façonnée selon la revendication 7 ou 8, par compression dans lequel
I) on introduit des particules en EPS selon l'une quelconque des revendications 1 à 6 dans un moule perméable aux gaz,
II) on comprime les particules introduites dans le moule formé avec réduction de volume en une pièce pressée,
III) on durcit la pièce pressée par traitement thermique à 20 jusqu'à 100°C, et
IV) on prélève la pièce façonnée du moule.

10. Procédé pour la fabrication des pièces façonnées selon la revendication 7 ou 8 par moussage, dans lequel
i) on introduit des particules en EPS selon l'une quelconque des revendications 1 à 6 dans un moule imperméable aux gaz,
ii) on mousse les particules introduites dans le moule fermé par traitement thermique à 60 jusqu'à 120°C, les particules se soudant en formant la pièce façonnée, et
iii) on prélève la pièce façonnée du moule.

11. Utilisation de pièces façonnées selon la revendication 7 ou 8 comme matériau d'isolation dans l'industrie de la construction.

12. Utilisation d'une pièce façonnée selon l'une quelconque des revendications 7 ou 8 pour la protection de bâtiments contre les termites.

13. Procédé pour la protection d'un bâtiment contre des termites, les pièces façonnées selon la revendication 7 ou 8 étant incorporées dans les fondations, les parois extérieures ou le toit du bâtiment à protéger.
